# EUROPÄISCHE PATENTANMELDUNG

(11) **EP 2 130 730 A2**
(43) Veröffentlichungstag der Anmeldung: **09.12.2009**
(21) Anmeldenummer: 09100309.5
(22) Anmeldetag: 29.05.2009
(51) Int. Cl.: B60S 1/34

(54) **Wischerwellenanordnung sowie Scheibenwischanlage**

(30) Priorität: 02.06.2008 DE 102008002147
(71) Anmelder: Robert Bosch GmbH, 70442 Stuttgart (DE)
(72) Erfinder: Benner, Andreas, 77830, Buehlertal (DE); Weiler, Michael, 77833, Ottersweier (DE); Boos, Tino, 76532, Baden-Baden (DE); Bicskei, Zoltan, 1105, Budapest (HU); Kraus, Achim, 77815, Buehl (DE)

(57) **Zusammenfassung**

Die Erfindung betrifft eine Wischerwellenanordnung (2) für eine Scheibenwischanlage (1) mit einer von einer Wischerwelle (3) in axialer Richtung durchsetzten Lagereinheit (8), wobei an einem oberen, freien Ende (4) der Wischerwelle (3) ein Wischerarm (5) festlegbar ist. Erfindungsgemäß ist vorgesehen, dass eine an der Lagereinheit (8) festgelegte, die Lagereinheit (8) in axialer Richtung nach unten überragende Schutzschürze (21) vorgesehen ist. Ferner betrifft die Erfindung eine Scheibenwischanlage (1).

## Beschreibung

### Stand der Technik

Die Erfindung betrifft eine Wischerwellenanordnung für eine Scheibenwischanlage gemäß dem Oberbegriff des Anspruchs 1 sowie eine Scheibenwischanlage, insbesondere für ein Kraftfahrzeug gemäß Anspruch 10.

Es ist bekannt, Lagereinheiten von Wischerwellenanordnungen für Frontscheibenwischanlagen mit einer axial zwischen der Lagereinheit und einem freien Ende der zugehörigen Wischerwelle angeordneten Schutzkappe vor Wasser und Schmutz zu schützen. Die Schutzkappe schützt dabei die Lagereinheit insbesondere vor von axial oben zuströmendem Wasser, insbesondere Regenwasser. Meist strömt jedoch das von axial oben kommende Wasser außen entlang der Mantelfläche der Lagereinheit in axialer Richtung nach unten und wird teilweise an der Unterseite der Lagereinheit nach radial innen umgelenkt. Hierdurch kann Wasser von unten her in die Lagereinheit hinein gelangen und dort zu erhöhten Verschleißerscheinungen führen. Ferner ist es möglich, dass die Lagereinheit, je nach Anordnung der Wischerwellenanordnung, von unten her mit Spritzwasser beaufschlagt wird.

### Offenbarung der Erfindung

### Technische Aufgabe

Der Erfindung liegt die Aufgabe zugrunde, eine Wischerwellenanordnung für eine Scheibenwischanlage vorzuschlagen, bei der die Lagereinheit besser vor Wasser und/oder Schmutz geschützt ist. Ferner besteht die Aufgabe darin, eine Scheibenwischanlage mit einer entsprechend optimierten Wischerwellenanordnung vorzuschlagen.

### Technische Lösung

Diese Aufgabe wird hinsichtlich der Wischerwellenanordnung mit den Merkmalen des Anspruchs 1 und hinsichtlich der Scheibenwischanlage mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, zusätzlich oder alternativ zu einer im oberen Bereich der Lagereinheit angeordneten Schutzkappe eine Schutzschürze vorzusehen, die die Lagereinheit, insbesondere seitlich, in axialer Richtung nach unten, d. h. in Richtung von dem freien Ende der Wischerwelle weg, überragt. Bevorzugt handelt es sich bei der Schutzschürze um ein rotationssymmetrisches Bauteil, insbesondere aus Kunststoff, mit einer umlaufenden Umfangswand, die sich in axialer Richtung über das untere Ende der Lagereinheit hinaus erstreckt. Somit wird verhindert, dass an der äußeren Mantelfläche der Lagereinheit entlang strömendes Wasser unmittelbar zur Unterseite der Lagereinheit gelangen kann - das Wasser wird mit Hilfe der Schutzschürze in axialer Richtung weiter nach unten, am unteren Ende der Lagereinheit vorbeigeführt. Darüber hinaus schützt eine derartige Schutzschürze auch vor Spritzwasser, das sich in Richtung der Unterseite der Lagereinheit bewegt. Ein weiterer Vorteil des Vorsehens einer Schutzschürze besteht darin, dass diese als Sichtschutz wirkt und hierdurch das ästhetische Erscheinungsbild der Wischerwellenanordnung verbessert.

Wie eingangs erläutert, ist eine Ausführungsform der Schutzschürze bevorzugt, bei der diese als rotationssymmetrisches Bauteil ausgeführt ist. Besonders bevorzugt ist es, wenn die Schutzschürze, um einen optimalen Schutz vor Wasser und/oder Schmutz zu gewährleisten, eine umfangsgeschlossene Umfangswand aufweist, die vorzugsweise radial außen am unteren Ende der Lagereinheit vorbeigeführt ist. Dabei sollte die umfangsgeschlossene Wand zumindest in einem unmittelbar radial außerhalb des unteren Endes der Lagereinheit angeordneten Bereich umfangsgeschlossen ausgebildet sein.

Im Hinblick auf die Art und Weise, wie die Schutzschürze an der Lagereinheit festgelegt ist, gibt es unterschiedliche Realisierungsmöglichkeiten. Um eine dauerhaft definierte Position einnehmen zu können, ist es besonders bevorzugt, die Schutzschürze formschlüssig an der Lagereinheit festzulegen. Bevorzugt ist die Lagereinheit zusätzlich zu dem Formschluss reibschlüssig an der Lagereinheit gehalten, insbesondere durch eine elastische Aufweitung der Schutzschürze bei Demontage. Es ist jedoch auch eine Ausführungsform realisierbar, bei der die Schutzschürze ausschließlich reibschlüssig, vorzugsweise die Lagereinheit radial klemmend, gegen axiales Abziehen gesichert, d. h. an der Lagereinheit gehalten ist.

Im Hinblick auf die Realisierung einer formschlüssigen Verbindung zwischen Schutzschürze und Lagereinheit ist es bevorzugt, wenn die Schutzschürze mit einem Halteabschnitt, der radial innen eine Durchgangsöffnung für die Lagereinheit begrenzt, in einer Umfangsnut der Lagereinheit gehalten ist. Bevorzugt befindet sich diese Umfangsnut endseitig an einem Formrohr der Lagereinheit, in dem mindestens eine Lagerbuchse, vorzugsweise zwei in axialer Richtung beabstandete Lagerbuchsen, zum pendelnden Lagern der Wischerwelle aufgenommen ist/sind. Besonders bevorzugt ist eine Ausführungsform, bei der diese Umfangsnut in axialer Richtung nach unten von einem Schulterabschnitt einer Lagerbuchse begrenzt ist, der die untere Stirnseite des Formrohrs (vorzugsweise Metallrohr) in radialer Richtung nach außen überragt.

In Weiterbildung der Erfindung ist mit Vorteil vorgesehen, dass zusätzlich zu der Schutzschürze eine untere, sich vorzugsweise wannenartig nach oben öffnende, Schutzkappe vorgesehen ist, die das axial untere Ende der Schutzschürze in axialer Richtung nach oben überragt. Bevorzugt ragt die Schutzkappe dabei in einen Bereich hinein, der radial außen von der Schutzschürze umschlossen ist. Wenn radial zwischen der Schutzkappe und der Schutzschürze ein Umfangsspalt vorgesehen wird, wirken die Schutzkappe und die Schutzschürze in der Art einer Labyrinthdichtung zusammen.

Von besonderem Vorteil ist eine Ausführungsform, bei der die untere Schutzkappe an einer Oberflächenstruktur der Wischerwelle gehalten ist. Dabei ist es besonders bevorzugt, wenn die Schutzkappe formschlüssig an der, insbesondere als Rillenstruktur ausgebildeten Oberflächenstruktur der Wischerwelle festgelegt ist. Dabei umfasst die Rillenstruktur bevorzugt eine Vielzahl von in axialer Richtung nebeneinander angeordneten Kreisrillen, in die die Schutzkappe radial eingreifen kann.

In Weiterbildung der Erfindung ist mit Vorteil vorgesehen, dass die Oberflächenstruktur, an der die untere Schutzkappe gehalten ist, gleichzeitig zur Bildung eines Formschlusses mit einer Federscheibe (Speednut) dient, wobei die Federscheibe bevorzugt die Funktion einer Axialsicherung für die Lagereinheit hat. Dabei kann sich die Federscheibe in axialer Richtung beispielsweise an einer unteren Anlaufscheibe, oder an einem Schulterabschnitt einer Lagerbuchse oder an der unteren Stirnseite eines Formrohrs der Lagereinheit abstützen.

Zusätzlich oder bevorzugt alternativ zum Festlegen der Schutzkappe an einer Oberflächenstruktur der Wischerwelle ist es vorteilhaft, wenn die Schutzkappe, insbesondere formschlüssig, an der Schutzschürze gehalten ist. Bevorzugt greift die Schutzkappe hierzu mit einem radial äußeren Ringabschnitt in eine innere Umfangsnut der Schutzschürze ein. Somit vereinigen sich die nach unten offene Schutzschürze und die nach oben offene Schutzkappe zu einem gemeinsamen zweiteiligen Schutzelement zum Schutz der Lagereinheit vor Schmutz und/oder Wasser.

Alternativ ist es denkbar, dass auf das Vorsehen einer separaten Schutzkappe verzichtet wird und die Schutzschürze in der Art einer einteiligen Kombination aus Schutzschürze und Schutzkappe ausgeformt ist. Anders ausgedrückt ist es denkbar, dass die Schutzschürze derart ausgeformt wird, dass diese sich in einem Bereich unterhalb des unteren Endes der Lagereinheit nach radial innen erstreckt, um somit einen optimalen Schutz vor einem Wassereintritt und/oder einem Schmutzeintritt von unten zu bieten.

Besonders bevorzugt ist eine Ausführungsform der Schutzschürze, bei der diese derart ausgebildet ist, dass sie bei um 180° gedrehter Anordnung als obere Schutzkappe dienen kann, die in einem Axialbereich zwischen dem freien Ende der Wischerwelle und dem oberen Ende der Lagereinheit an einer Oberflächenstruktur der Wischerwelle festlegbar ist. Durch das Vorsehen von zwei, vorzugsweise identischen, derartiger Schutzschürzen (obere Schutzkappe/ untere Schutzschürze) kann die Lagereinheit optimal von allen Richtungen her gegen eindringendes Wasser und/oder gegen eindringenden Schmutz geschützt werden.

Ferner führt die Erfindung auf eine Scheibenwischanlage, insbesondere für ein Kraftfahrzeug, mit einer zuvor beschriebenen Wischerwellenanordnung. Besonders bevorzugt handelt es sich bei der Scheibenwischanlage um eine Frontwischanlage, wobei in diesem Fall die Wischerwelle bevorzugt über ein Wischergestänge pendelnd angetrieben ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine schematische, teilgeschnittene Darstellung einer Wischerwellenanordnung einer als Frontscheibenwischanlage ausgebildeten Scheibenwischanlage,
- Fig. 2: in einer schematischen, teilgeschnittenen Darstellung eine mögliche Ausbildung einer an einer Lagereinheit der Wischerwellenanordnung festgelegten unteren Schutzschürze,
- Fig. 3: in einer schematischen, teilgeschnittenen Darstellung eine einteilige Kombination aus einer unteren Schutzschürze und einer axial in diese von unten her hineinragenden Schutzkappe,
- Fig. 4: in einer schematischen, teilgeschnittenen Darstellung eine an einer Schutzschürze festgelegte Schutzkappe,
- Fig. 5: in einer schematischen, teilgeschnittenen Darstellung eine klemmend an der Lagereinheit gehaltene Schutzschürze, die auch als obere Schutzkappe dienen kann und
- Fig. 6: in einer schematischen, teilgeschnittenen Darstellung eine Schutzschürze, die gleichzeitig die Funktion einer unteren Schutzkappe übernimmt.

### Ausführungsformen der Erfindung

In den Figuren sind gleiche Bauteile und Bauteile mit der gleichen Funktion mit den gleichen Bezugszeichen gekennzeichnet.

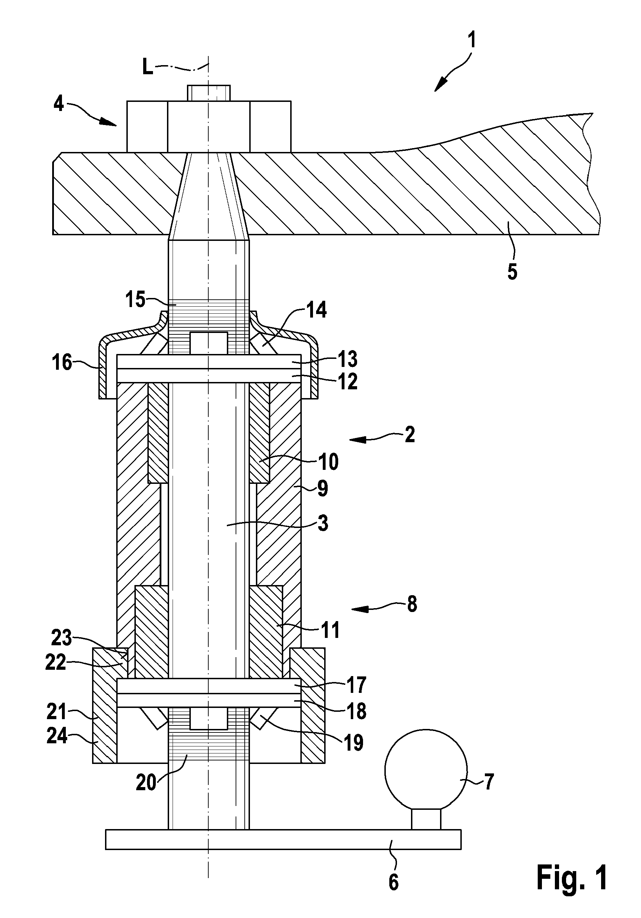

In Fig. 1 ist ausschnittsweise eine Scheibenwischanlage 1 mit einer Wischerwellenanordnung 2 gezeigt. Die Wischerwellenanordnung 2 umfasst eine Wischerwelle 3, die im Bereich ihres freien oberen Endes 4 drehfest einen Wischerarm 5 trägt. Mit ihrem unteren Ende ist die Wischerwelle 3 an einer Kurbelplatte 6 eines ansonsten nicht weiter dargestellten, an sich bekannten Kurbelgestänges festgelegt. Auf der Kurbelplatte 6 befindet sich ein Kugelkopf 7 (Gelenkzapfen) zum Anschluss der Kurbelplatte 6 an nicht gezeigte Gelenkstangen. Mit Hilfe des Kurbelgestänges wird die Kurbelplatte 6 und damit die Wischerwelle 3 sowie der Wischerarm 5 pendelnd um die Längsachse L der Wischerwelle bewegt.

Die Wischerwelle 3 durchsetzt in axialer Richtung eine Lagereinheit 8. Diese umfasst ein drehfest angeordnetes Formrohr 9 (Metallrohr), in dem zwei in axialer Richtung beabstandete Lagerbuchsen 10, 11 aufgenommen sind, die die Wischerwelle 3 unmittelbar lagern. Oben auf der Lagereinheit 8 liegt eine obere Anlaufscheibe 12 auf, an der sich in axialer Richtung von oben eine Federscheibe 13 (Speednut) abstützt. Die Federscheibe 13 ist mit Hilfe von in Umfangsrichtung beabstandeten, nach radial innen ragenden Federlaschen 14 mit einer als Rillenstruktur ausgebildeten axial oberen Oberflächenstruktur 15 verkrallt. Die Oberflächenstruktur 15 setzt sich dabei ausgehend von der Lagereinheit 8 ein Stück weit in axialer Richtung nach oben fort.

Die obere Oberflächenstruktur 15 dient gleichzeitig zum formschlüssigen Halten einer oberen Schutzkappe 16, die wie die Federscheibe 13 und die obere Anlaufscheibe 12 von der Wischerwelle 3 in axialer Richtung durchsetzt wird. Die nach unten offene obere, wannenförmige, Schutzkappe 16 erstreckt sich in axialer Richtung über das obere, von der Anlaufscheibe 12 gebildete Ende der Lagereinheit 8 hinaus in axialer Richtung nach unten bis in einen Bereich radial außerhalb der Umfangsfläche des Formrohrs 9. Die obere Schutzkappe 16 umschließt also sowohl die Federscheibe 13 als auch die obere Anlaufscheibe 12 und die obere Stirnseite des Formrohres 9 radial außen.

An der Unterseite des Formrohres 9 liegt eine untere Anlaufscheibe 17 an, die mittels einer weiteren Federscheibe 18 (Speednut) gegen axiales Verschieben (nach außen) gesichert ist. Die untere Federscheibe 18 ist mit Hilfe von nach radial innen ragenden Federlaschen 19 an einer axial unteren, ebenfalls rillenförmigen Oberflächenstruktur 20 der Wischerwelle 3 gehalten.

Wie sich somit aus Fig. 1 ergibt, ist die Lagereinheit 8 gegen axiales Verschieben nach oben mit Hilfe der oberen Federscheibe und gegen axiales Verschieben nach unten relativ zur Wischerwelle 3 mit Hilfe der unteren Federscheibe 18 gesichert.

Um ein Eindringen von von außen entlang des Formrohrs 9 nach unten strömenden Wassers von unten her in die Lagereinheit 8 zu verhindern, ist eine als Kunststoffteil ausgebildete, rotationssymmetrische Schutzschürze 21 vorgesehen. Diese weist einen oberen, nach radial innen gerichteten Halteabschnitt 22 auf, mit dem die Schutzschürze 21 formschlüssig in einer Umfangsnut 23 der Lagereinheit 8 gehalten ist. Mit einer umfangsgeschlossenen Umfangswand 24 erstreckt sich die Schutzschürze 21 in axialer Richtung nach unten über die Lagereinheit 8 hinaus. In dem gezeigten Ausführungsbeispiel gemäß Fig. 1 ist die Umfangswand 24 im Wesentlichen kreiszylindrisch konturiert.

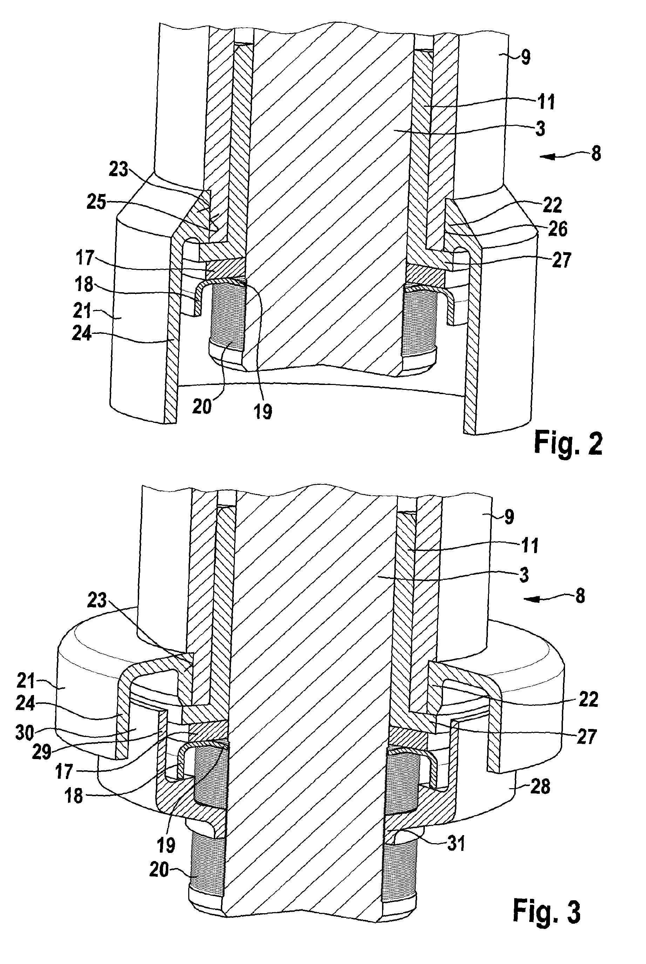

In Fig. 2 ist eine mögliche Ausbildung und Anordnung der als Kunststoffspritzgussteil ausgebildeten Schutzschürze 21 gezeigt. Zu erkennen ist der ringförmige, nach radial innen ragende Halteabschnitt 22, der radial innen eine Durchgangsöffnung 25 begrenzt, die von der Lagereinheit 8 axial durchsetzt ist. Im unteren Randbereich des Formrohrs 9 der Lagereinheit 8 ist eine Abstufung 26 am Außenumfang vorgesehen. Die Abstufung 26 bildet zusammen mit einem ringförmigen, nach radial außen ragenden und die untere Stirnseite des Formrohrs radial übergreifenden Schulterabschnitt 27 der unteren Lagerbuchse 11 eine Umfangsnut 24, in die die Schutzschürze 21 mit ihrem Halteabschnitt 22 radial eingreift. An den Halteabschnitt 22 grenzt axial eine umfangsgeschlossene Umfangswand 24 an, die sich über das untere, von der unteren Anlaufscheibe 17 gebildete Ende der Lagereinheit 8 in axialer Richtung hinauserstreckt. In Fig. 2 ist deutlich die untere Federscheibe 18 zu erkennen, die mit ihren Federlaschen 19 mit der unteren, rillenförmigen Oberflächenstruktur 20 der Wischerwelle 3 verkrallt ist. Die Oberflächenstruktur 20 besteht aus einer Vielzahl von in axialer Richtung benachbarten, umlaufenden, kreisringförmigen Rillen.

In Fig. 3 ist ausschnittsweise ein alternatives Ausführungsbeispiel einer Wischerwellenanordnung 2 gezeigt, bei der die in einer Umfangsnut 23 der Lagereinheit 8 gehaltene Schutzschürze 21 mit einer unteren Schutzkappe 28 in der Art einer Labyrinthdichtung zusammenwirkt. Zu erkennen ist, dass die Axialerstreckung der umfangsgeschlossenen Umfangswand 24 wesentlich kürzer ist als bei dem Ausführungsbeispiel gemäß Fig. 2. In axialer Richtung nach unten wird die Umfangswand 24 quasi verlängert von einer umlaufenden Wand 29 der Schutzkappe 28, wobei die umlaufende Wand 29 das untere Ende der Umfangswand 24 der Schutzschürze 21 in axialer Richtung nach oben überragt. Das obere Ende der umlaufenden Wand 29 der Schutzkappe 28 ist dabei in einem von der Umfangswand 24 umschlossenen Bereich der Schutzschürze 21 aufgenommen, sodass ein unmittelbares Einströmen von Wasser von oben sicher vermieden wird. Zwischen dem Außenumfang der umlaufenden Wand 29 und dem Innenumfang der Umfangswand 24 der Schutzschürze 24 ist ein Umfangsspalt 30 ausgebildet.

Wie sich weiter aus Fig. 3 ergibt, ist die untere Schutzkappe 28 in einem axial von der unteren Schutzschürze 21 beabstandeten Bereich mit einem ringförmigen Fixierabschnitt 31 an der unteren Oberflächenstruktur 20 festgelegt. In axialer Richtung nach oben beabstandet von dem Fixierabschnitt 31 greift die untere Federscheibe 18 mit ihren Federlaschen 19 in dieselbe Oberflächenstruktur 20 formschlüssig ein. Zu erkennen ist, dass sich die untere Schutzkappe 28 in axialer Richtung nach oben an der unteren Federscheibe 18 abstützt.

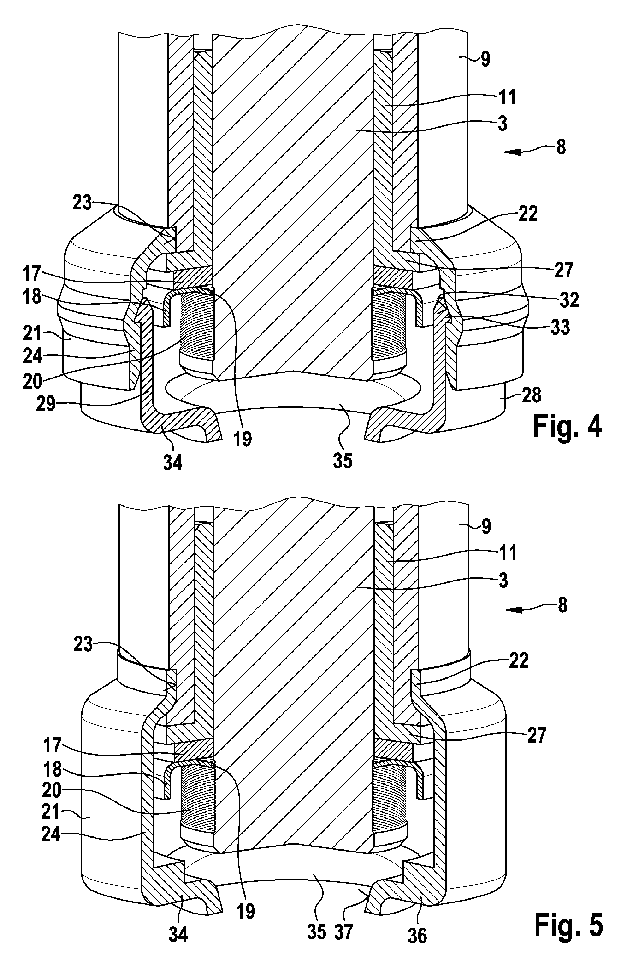

Bei dem Ausführungsbeispiel gemäß Fig. 4 ist am Innenumfang der unteren Schutzschürze 21 eine Ringnut 32 eingebracht. In die Ringnut 32 greift von radial innen her ein Ringabschnitt 33 der unteren Schutzkappe 28 in radialer Richtung nach außen ein. Anders ausgedrückt ist der Ringabschnitt 33 mit der Ringnut 32 verrastet. Bei dem gezeigten Ausführungsbeispiel gemäß Fig. 4 ist radial zwischen der unteren Schutzkappe 28 und der unteren Schutzschürze 21 kein Umfangsspalt gebildet, wodurch der Schutz vor Wasser und Schmutz weiter optimiert ist.

An die umlaufende Wand 29 der unteren Schutzkappe 28, schließt ein ringförmiger, nach radial innen gerichteter Radialabschnitt 34 an, der in seinem radial inneren Bereich eine zentrische Wasserablauföffnung 35 begrenzt, durch die in einen Bereich innerhalb der Schutzschürze 21 gelangtes Wasser, beispielsweise Kondenswasser nach unten abströmen kann.

Bei dem Ausführungsbeispiel gemäß Fig. 5 ist die untere Schutzschürze 21 nicht in einer Umfangsnut der Lagereinheit 8 aufgenommen, sondern liegt, die Lagereinheit 8 radial innen klemmend, am Außenumfang des Formrohrs 9 in einem unteren Randbereich an. Ausgehend von diesem, das Formrohr 9 klemmenden Halteabschnitt 21 erstreckt sich die umfangsgeschlossene Umfangswand 24 in axialer Richtung nach unten. Der untere Bereich der Schutzschürze 21 wird gebildet von einem Kappenabschnitt 36, der zumindest näherungsweise ausgeformt ist wie eine untere Schutzkappe. Der Kappenabschnitt 36 umfasst einen sich nach radial innen erstreckenden Radialabschnitt 34, der in einem axial unteren Bereich eine zentrische Wasserablauföffnung 35 begrenzt. Die in Fig. 5 gezeigte Schutzschürze 21 kann auch als obere Schutzkappe eingesetzt werden, wobei in diesem Fall die Wasserablauföffnung 35 von der Wischerwelle 3 in axialer Richtung durchsetzt ist und der Umfangsrand 37 der Wasserablauföffnung 35 zur formschlüssigen Verbindung mit einer oberen Oberflächenstruktur der Wischerwelle 3 dient.

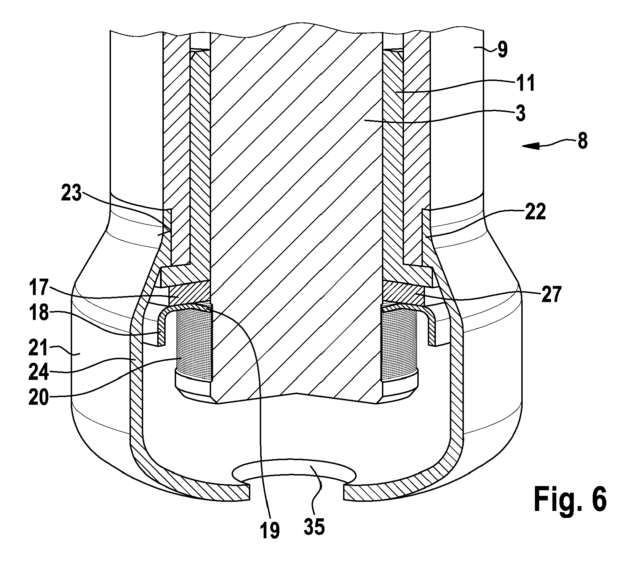

Bei dem Ausführungsbeispiel gemäß Fig. 6 handelt es sich wie bei dem Ausführungsbeispiel gemäß Fig. 5 um eine einteilige Kombination aus unterer Schutzschürze 21 und unterer Schutzkappe 28. Zu erkennen ist, dass die untere, zentrische Wasserablauföffnung 35 einen wesentlich geringeren Durchmesser aufweist als der Außendurchmesser der Wischerwelle 3, sodass die Schutzschürze 21 gemäß Fig. 6 nicht als obere Schutzkappe eingesetzt werden kann. Im Unterschied zu dem Ausführungsbeispiel gemäß Fig. 5 ist die untere Schutzschürze 21 mit ihrem ringförmigen Halteabschnitt 22 in einer Umfangsnut 24 der Lagereinheit 8 formschlüssig gehalten.

## Patentansprüche

1. Wischerwellenanordnung für eine Scheibenwischanlage (1) mit einer von einer Wischerwelle (3) in axialer Richtung durchsetzten Lagereinheit (8), wobei an einem oberen, freien Ende (4) der Wischerwelle (3) ein Wischerarm (5) festlegbar ist,
**dadurch gekennzeichnet,**
**dass** eine an der Lagereinheit (8) festgelegte, die Lagereinheit (8) in axialer Richtung nach unten überragende Schutzschürze (21) vorgesehen ist.

2. Wischerwellenanordnung nach Anspruch 1,
**dadurch gekennzeichnet,**
**dass** die Schutzschürze (21) die Lagereinheit (8) axial mit einer, zumindest in einem oberen Bereich, umfangsgeschlossenen Umfangswand (24) überragt.

3. Wischerwellenanordnung nach einem der Ansprüche 1 oder 2,
**dadurch gekennzeichnet,**
**dass** die Schutzschürze (21) mit einem eine Durchgangsöffnung (25) für die Lagereinheit (8) begrenzenden Halteabschnitt (22) formschlüssig und/oder reibschlüssig, vorzugsweise die Lagereinheit (8) klemmend, an der Lagereinheit (8) festgelegt ist.

4. Wischerwellenanordnung nach Anspruch 3,
**dadurch gekennzeichnet,**
**dass** die Schutzschürze (21) mit ihrem Halteabschnitt (22) in einer Umfangsnut (23) gehalten ist, die vorzugsweise gebildet ist, von einer randseitigen Abstufung (26) eines Formrohres (9) und einem axial daran angrenzenden, nach radial außen ragenden Schulterabschnitt (27) einer abschnittsweise in dem Formrohr (9) aufgenommenen Lagerbuchse (10, 11).

5. Wischerwellenanordnung nach einem der vorhergehenden Ansprüche,
**dadurch gekennzeichnet,**
**dass** eine untere Schutzkappe (28) vorgesehen ist, die einen axial unteren Randbereich der Schutzschürze (21) in axialer Richtung nach oben überragt, vorzugsweise in einem Bereich radial innerhalb der Schutzschürze (21).

6. Wischerwellenanordnung nach Anspruch 5,
**dadurch gekennzeichnet,**
**dass** die untere Schutzkappe (28) an einer, insbesondere als Rillenstruktur ausgebildeten, Oberflächenstruktur (20) der Wischerwelle (3) gehalten ist.

7. Wischerwellenanordnung nach Anspruch 6,
**dadurch gekennzeichnet,**
**dass** an der Oberflächenstruktur (20) eine Federscheibe (18) als Axialsicherung für die Lagereinheit (8) festgelegt ist.

8. Wischerwellenanordnung nach einem der Ansprüche 5 bis 7,
**dadurch gekennzeichnet,**
**dass** die untere Schutzkappe (28), insbesondere formschlüssig, an der unteren Schutzschürze (21) festgelegt ist.

9. Wischerwellenanordnung nach einem der vorhergehenden Ansprüche,
**dadurch gekennzeichnet,**
**dass** die Schutzschürze (21) derart ausgeformt ist,
**dass** sie sich in einem unteren Bereich in radialer Richtung nach innen, vorzugsweise unter Aussparung einer, insbesondere zentrischen, Wasserablauföffnung (35), erstreckt.

10. Scheibenwischanlage, insbesondere für ein Kraftfahrzeug, mit einer Wischerwellenanordnung (2) nach einem der vorhergehenden Ansprüche.
